# EUROPÄISCHE PATENTANMELDUNG

(11) **EP 2 747 226 A1**
(43) Veröffentlichungstag der Anmeldung: **25.06.2014**
(21) Anmeldenummer: 12198556.8
(22) Anmeldetag: 20.12.2012
(51) Int. Cl.: H02G 5/10

(54) **Hochspannungsgeneratorstromschiene mit verbesserten Kühlungsmitteln**

(71) Anmelder: ABB Technology AG, 8050 Zürich (CH)
(72) Erfinder: Zehnder, Lukas, 5405 Baden-Dättwil (CH); Nohl, Andreas, 8248 Uhwiesen (CH)
(74) Vertreter: ABB Patent Attorneys

(57) **Zusammenfassung**

Die Hochstromanordnung enthält einen längs einer Achse (A) erstreckten Hochstromleiter (20) sowie eine den Hochstromleiter (20) umfassende Kapselung (10) und einen am Hochstromleiter (20) in thermisch leitender Weise angeordneten Kühler (31, 32, 33), der in einen von Hochstromleiter und Kapselung radial begrenzten Innenraum (16) ragt. Bei Betrieb der Hochstromanordnung ist im Innenraum eine in axialer Richtung verlaufende, Kühlluft enthaltende Axialströmung (H) führbar.

Um die Betriebssicherheit dieser Hochstromanlage zu erhöhen weist der Kühler einen um die Achse geführten Kranz (40a, 40b) von vorwiegend radial ausgerichteten Kühlelementen (41) auf und bilden diese Kühlelemente (41) vorwiegend axial geführte erste Strömungskanäle (SH) sowie zweite Strömungskanäle (SV), die entlang dem Umfang des Hochstromleiters (20) geführt sind und bei Ausfall der Axialströmung (H) der Führung einer entlang dem Umfang des Hochstromleiters (20) ausgerichteten, von unten nach oben verlaufenden Vertikalströmung (V) dienen.

## Beschreibung

### TECHNISCHES GEBIET

Die vorliegende Erfindung bezieht sich auf eine Hochstromanordnung nach dem einleitenden Teil von Patentanspruch 1.

### STAND DER TECHNIK

Eine Hochstromanordnung der vorgenannten Art ist in einem der Energieversorgung dienenden Hochspannungsnetz in eine Stromverbindung eingebaut, die einen Generator mit einem Transformator verbindet. Eine solche Hochstromanordnung kann grosse Dauerströme führen und hohe Kurzschlussströme unterbrechen. Sie weist einen zumindest abschnittsweise in einer berührungsgeschützten Kapselung angeordneten Hochstromleiter auf, der den Generator über einen als Generatorschalter bezeichneten, Stromanschlüsse sowie eine Leistungs- und eine Trennschaltstelle enthaltenden Stromkreisunterbrecher mit dem Transformator verbindet.

Werden in einer solchen gekapselten Hochstromanordnung Dauerströme von typischerweise über 25 kA geführt, dann wird die im Hochstromleiter gebildete Stromwärme im allgemeinen mit Hilfe einer zwangsgeführten Kühlluftströmung aus dem Inneren der Hochstromanordnung entfernt. Die durch Gebläse erzeugte Kühlluftströmung streicht dabei längs einer vorwiegend horizontal ausgerichteten Achse entlang dem Hochstromleiter. Um eine gute Kühlleistung zu erreichen, weist ein am Hochstromleiter in wärmeleitender Weise angebrachter Kühler in axialer Richtung erstreckte, rippenförmige Kühlelemente auf, die von der zwangsgeführten Kühlluft axial beströmt werden.

Eine solche Hochstromanordnung ist beispielsweise in EP 1 667 300 A1 beschrieben.

### DARSTELLUNG DER ERFINDUNG

Der Erfindung, wie sie in den Patentansprüchen angegeben ist, liegt die Aufgabe zugrunde, eine Hochstromanordnung der vorgenannten Art zu schaffen, die sich bei einfachem Aufbau durch eine grosse Betriebssicherheit auszeichnet.

Gemäss der vorliegenden Erfindung wird eine Hochstromanordnung bereitgestellt mit einem längs einer Achse erstreckten, vorwiegend horizontal ausgerichteten und mit Hochspannungspotential belastbaren, axialsymmetrischen Hochstromleiter, einer den Hochstromleiter umfassenden, mit Erdpotential verbindbaren Kapselung, einem von Hochstromleiter und Kapselung radial begrenzten Innenraum, in dem bei Betrieb der Hochstromanordnung eine in axialer Richtung verlaufende, Kühlluft enthaltenden Axialströmung führbar ist, und mit mindestens einem am Hochstromleiter in thermisch leitender Weise angeordneten, in den Innenraum ragenden Kühler.

Bei dieser Anordnung weist der mindestens eine Kühler mindestens einen um die Achse geführten Kranz von vorwiegend radial ausgerichteten Kühlelementen auf und bilden die Kühlelemente vorwiegend axial geführte erste Strömungskanäle sowie zweite Strömungskanäle, die entlang dem Umfang des Hochstromleiters geführt sind und bei Ausfall der Axialströmung der Führung einer entlang dem Umfang des Hochstromleiters ausgerichteten von unten nach oben verlaufenden Vertikalströmung dienen.

Die Hochstromanordnung nach der Erfindung enthält Kühlelemente, die in zwei voneinander unabhängigen Richtungen optimal mit Kühlluft beströmbar sind. Bei störungsfreiem Betrieb der Hochstromanordnung wird der Hochstromleiter durch Beströmung mit einer zwangsgeführten und vorwiegend in horizontaler Richtung durch erste Strömungskanäle streichenden Axialströmung gekühlt. Fällt diese Axialströmung, etwa wegen eines defekten Gebläses, weitgehend weg, so wird der Hochstromleiter mit einer durch natürliche Konvektion hervorgerufenen und vorwiegend durch zweite Strömungskanäle streichenden Vertikalströmung beströmt. In dieser Vertikalströmung steigt die durch Konvektion am Hochstromleiter erwärmte Luft in den zweiten Strömungskanälen nach oben und saugt unter dem Hochstromleiter befindlich kühle Luft an, welche durch die Vertikalströmung in die zweiten Strömungskanäle geführt wird und dabei den Kühlelementen resp. dem Hochstromleiter Wärme entzieht. Die Hochstromanordnung kann daher trotz einer durch fehlende oder erheblich reduzierte Axialströmung verursachten Störung noch über einen vergleichsweise langen Zeitraum weiterbetrieben werden und zeichnet sich daher durch eine hohe Betriebssicherheit aus.

In einer vorteilhaften Ausführungsform enthält der mindestens eine in der Hochstromanordnung vorgesehene Kranz mindestens zwei in axialer Richtung mit Abstand voneinander gehaltene Kühlringe, in denen jeweils eine zweier Gruppen der Kühlelemente angeordnet sind, und die Kühlelemente jeder der beiden Gruppen mit Abstand voneinander in Umfangsrichtung der Kühlringe angeordnet sind. In bevorzugten Varianten dieser Ausführungsform sind die Kühlelemente eines ersten und des zweiten der mindestens zwei Kühlringe achsparallel oder aber auch in Umfangsrichtung jedes Ringes gegeneinander versetzt angeordnet.

In weiteren vorteilhaften Ausführungsformen der erfindungsgemässen Hochstromanordnung ist zumindest der überwiegende Teil der Kühlelemente stiftförmig oder flächenförmig ausgebildet. Sind die Kühlelemente flächenförmig ausgebildet, so enthalten sie jeweils mindestens eine von zwei Anströmflächen für die Axialströmung, von denen eine erste vorwiegend senkrecht zur Achse und die zweite gegenüber der Achse geneigt ausgerichtet ist.

Um eine einfache Fertigung der Hochstromanlage nach der Erfindung zu ermöglichen, kann der mindestens eine Kranz mindestens zwei in Umfangsrichtung des Kranzes aufeinanderfolgende Segmente aufweisen, von denen mindestens eines einen Teil der Kühlelemente enthält. Das mindestens eine Segment kann einen wärmeleitend auf dem Hochstromleiter fixierten Montagekörper aufweisen, der in fertigungstechnisch vorteilhafter Weise als Platte ausgebildet sein kann.

### KURZE BESCHREIBUNG DER ZEICHNUNGEN

Anhand von Zeichnungen werden nachfolgend Ausführungsbeispiele der Erfindung näher erläutert. Hierbei zeigen in schematischer Darstellung:
- Fig.1: eine Seitenansicht eines einen Generatorschalter enthaltenden Abschnitts einer ersten Ausführungsform der Hochstromanordnung nach der Erfindung, bei dem ein dem Betrachter zugewandter Teil einer Kapselung dieser Anordnung entfernt wurde,
- Fig.2: eine in Pfeilrichtung geführte Aufsicht auf einen längs II-II geführten Schnitt durch die Hochstromanordnung nach Fig.1,
- Fig.3: in isometrischer Darstellung vier Segmente eines an einem Hochstromleiter wärmeleitend befestigten Kühlers der Hochstromanordnung nach den Figuren 1 und 2, und die
- Figuren 4 resp. 5: in isometrischer Darstellung jeweils einen Kühler einer zweiten resp. dritten Ausführungsform der Hochstromanordnung nach der Erfindung, bei der der Kühler wärmeleitend an einem Hochstromleiter der Hochstromanordnung befestigbar oder bereits in den Hochstromleiter eingeformt ist.

### WEGE ZUR AUSFÜHRUNG DER ERFINDUNG

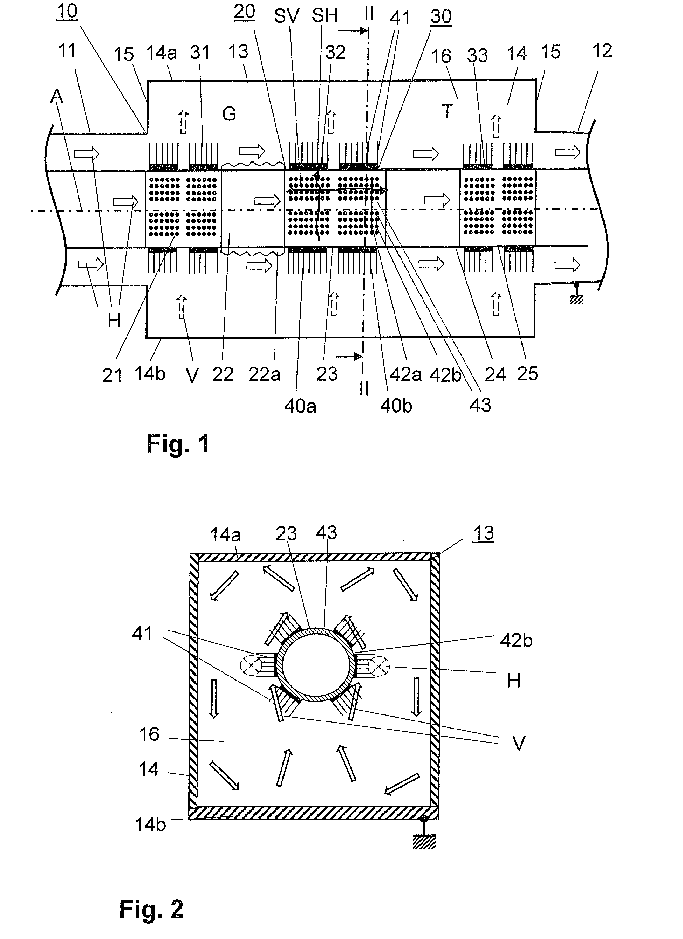

In allen Figuren beziehen sich gleiche Bezugszeichen auf gleichwirkende Teile. Der in den Figuren 1 und 2 dargestellten Abschnitt ist Teil einer Phase einer im allgemeinen mehrphasigen Hochstromanordnung, typischerweise einer Generatorableitung, und enthält eine als Berührungsschutz der Anordnung dienende geerdete Metallkapselung 10, einen in der Kapselung 10 gehaltenen, längs einer Achse A erstreckten Hochstromleiter 20 und eine Kühlvorrichtung 30.

Die Kapselung 10 dient neben dem Berührungsschutz auch der Führung eines bei Betrieb der Anordnung auftretenden Rückstroms und enthält ein mit einem nicht dargestellten Generatorgehäuse verbindbares Mantelrohr 11, ein mit einem ebenfalls nicht dargestellten Transformatorgehäuse verbindbares Mantelrohr 12 sowie ein im allgemeinen prismenförmiges Gehäuse 13 mit parallel zum Hochstromleiter 20 ausgerichteten Wänden 14 und senkrecht zum Hochstromleiter ausgerichteten Querwänden 15. In die Querwände 15 ist jeweils eine kreisrunde Öffnung zur Durchführung des Hochstromleiters eingeformt. Ein Ende des Mantelrohrs 11 bzw. 12 ist an einem die Öffnung begrenzenden Rand eine der beiden Querwände 15 befestigt.

Der Hochstromleiter 20 dient der Führung eines im Generator erzeugten Stroms von typischerweise 10 bis 50 kA bei Spannungen von typischerweise 10 bis 50 kV. Er weist mehrere entlang der Achse A aufeinanderfolgende Abschnitte 21 bis 25 auf, von denen drei, nämlich 21, 22 und 23, Teil eines in die Generatorableitung eingebauten Generatorschalters G und zwei, nämlich 24 und 25, Teil eines in Serie zum Generatorschalter in die Generatorableitung eingebauten Trennschalters T sind.

Der Abschnitt 21 umfasst ein Gehäuse, welches dem elektrischen Anschliessen des Generatorschalters G an einen Abschnitt der Generatorableitung dient, der mit einem nicht dargestellten Generator verbindbar ist. Der nach rechts anschliessende Abschnitt 22 ist als Löschkammer des Generatorschalters G ausgeführt und enthält eine durch einen Löschkammerisolator 22a umschlossene und daher nicht ersichtliche Kontaktanordnung mit einem Nennstrom- und einem dazu parallel geschaltetem Abbrandkontaktsystem. In einem an die Löschkammer 22 anschliessenden Antriebsgehäuse 23 des Generatorschalters ist ein Getriebe eines Antriebs zum Öffnen und Schliessen der in der Löschkammer vorgesehenen Kontaktsysteme angeordnet. An das Antriebsgehäuse 23 schliesst nach rechts ein als bewegliches Trennerrohr ausgebildeter und dem Trennschalter T zugeordneter Abschnitt 24 des Hochstromleiters an. Das Trennerrohr dient der Erzeugung einer sichtbaren Trennstrecke im Hochstromleiter. Der nach rechts anschliessende Abschnitt 25 des Hochstromleiters ist ein Trennergehäuse, das die Aufnahme des Trennerrohrs 24 und eines zwischen Trennergehäuse 25 und Trennerrohr angeordneten Gleitkontakts ermöglicht. Das Trennergehäuse 25 ist in elektrisch leitender Weise mit einem an einen Transformator geführten Abschnitt der Generatorableitung verbunden. Kapselung 10 und Hochstromleiter 20 begrenzen in axialer Richtung einen mit Kühlluft durchströmbaren Innenraum 16.

Bei Betrieb der Generatorableitung wird der Stromleiter 20 erheblich erhitzt. Um seine Temperatur unter einem Grenzwert von typischerweise 80 bis 110°C zu halten, sind an den besonders einfach zu kühlenden Abschnitten 21, 23 und 25 der Reihe nach in wärmeleitender Weise jeweils einer von drei Kühlern 31, 32 und 33 der Kühlvorrichtung 30 angebracht. Diese Kühler sind der Reihe nach in thermisch leitender Weise an je einem der Abschnitte 21, 23 und 25 befestigt und ragen jeweils in den Innenraum 16.

Jeder der drei Kühler weist zwei um die Achse A geführte Kränze 40a, 40b von vorwiegend radial ausgerichteten Kühlelementen 41 auf (aus Gründen der Übersichtlichkeit in Fig.1 nur für den Kühler 32 angegeben). Jeder Kühlkranz enthält, wie stellvertretend in Fig.1 für den Kranz 40b dargestellt ist, mindestens zwei benachbarte, in axialer Richtung mit Abstand voneinander gehaltene Kühlringe 42a, 42b, in denen die radial ausgerichteten Kühlelemente 41 nach Art von Speichen auf einem weitgehend konzentrisch um die Achse A geführten Kreis 43 angeordnet sind.

Aus Fig.2 ist ersichtlich, dass der stellvertretend für die anderen Kühlringe dargestellte Kühlring 42b eine Gruppe von beispielsweise 20 oder 30 der vorwiegend radial ausgerichteten Kühlelemente 41 enthält. Aus Fig.2 ist auch zu erkennen, dass in Umfangsrichtung des Kreises 43 benachbarte Kühlelemente 41 mit Abstand voneinander gehalten sind.

Bei Betrieb der Generatorableitung führt der Innenraum 16 eine im allgemeinen durch Gebläse angetriebene, in axialer Richtung von links nach rechts fliessende Kühlluftströmung. Diese Strömung ist durch horizontal ausgerichtete Pfeile H angedeutet. Dadurch, dass die Kühlelemente 41 vorwiegend radial ausgerichtet sind und nach Art von Speichen auf dem weitgehend konzentrisch um die Achse A geführten Kreis 43 angeordnet sind, bilden die einzelnen Kühlelemente 41 in den Kühlern 31, 32, 33 in axialer Richtung erstreckte Strömungskanäle SH (in den Figuren ist stellvertretend für alle Kanäle SH nur ein einziger Kanal und nur beim Kühler 32 gezeigt). In diesen Kanälen strömt die von den Gebläsen angetriebene Kühlluft vorwiegend in horizontaler Richtung von links nach rechts und entzieht dabei den angeströmten Kühlelementen 41 und damit auch dem Hochstromleiter 20 Wärme. Die erwärmte Luft strömt vorwiegend in axialer Richtung entlang dem Hochstromleiter 20 und überträgt dabei einen grossen Teil der vom Hochstromleiter 20 aufgenommenen Stromwärme auf die der Aussenluft ausgesetzte und daher besonders einfach kühlbare Kapselung.

Die Kühlelemente 41 sind zugleich so ausgebildet, dass sie nicht nur die axial geführten Strömungskanäle SH, sondern zugleich auch weitere Strömungskanäle SV bilden, die entlang dem Umfang des Hochstromleiters zueinander im wesentlichen parallel geführt sind und vertikal von unten nach oben verlaufen. In den Figuren ist stellvertretend für alle Strömungskanäle SV nur ein einziger Kanal und dieser nur beim Kühler 32 gezeigt. Die Kühlungskanäle SV werden wirksam, wenn die Gebläse ausfallen und die entlang dem Hochstromleiter 20 im Innenraum 16 geführte, vorwiegend horizontal resp. axial ausgerichtete Kühlluftresp. Axialströmung H zum Stillstand kommt. Da die Strömungskanäle SV entlang dem Umfang des Hochstromleiters geführt sind und vertikal von unten nach oben verlaufen, steigt nun die den Hochstromleiter 20 umgebende, vom Hochstromleiter aufgeheizte Luft vorwiegend in einer Vertikalströmung V entlang dem Umfang des Hochstromleiters 20 vertikal nach oben auf. Dabei streicht die aufsteigende Luft auf ihrem Weg durch die Strömungskanäle SV an den einzelnen in den Innenraum 16 ragenden Kühlelementen entlang und entzieht so dem Hochstromleiter Wärme. Wie in Fig.2 dargestellt, wird die Vertikalströmung V an einem als Dach 14a ausgebildeten Teil des Gehäuses 13 gegenüber der Vertikalen umgelenkt. Dabei bilden sich zwei entlang dem Dach 14a gegenläufig nach rechts und nach links geführte, durch Pfeile gekennzeichnete Teilströme. Diese Teilströme werden entlang dem Dach und entlang den horizontal erstreckten Seitenwänden 14 des Gehäuses geführt und geben dabei Wärme ans Gehäuse 13 ab. Die abgekühlte Luft zirkuliert entlang den Seitenwänden 14 nach unten und wird an einem als Boden 14b ausgebildeten Teil des Gehäuses durch die am Hochstromleiter erwärmte aufsteigende Luft unter schliessen eines Kühlluftkreislaufs nach oben gesaugt. Im Boden vorgesehene nicht dargestellte Öffnungen erhöhen den Wirkungsgrad dieses Kühlkreislaufes durch Einsaugen von kühler Umgebungsluft.

Um die durch natürliche Konvektion hervorgerufene Vertikalströmung V zu optimieren ist es vorteilhaft, den axialen Abstand der Kühlringe 42a, 42b zwischen zehn und zwanzig Millimeter zu wählen. Es wird so sichergestellt, dass die typischerweise bis zu 100 Millimeter vorwiegend in radialer Richtung erstreckten und aus einem die Stromwärme gut leitenden Material, wie insbesondere Aluminium, Kupfer oder gegebenenfalls auch Stahl, bestehenden Kühlelemente 41 dann eine grosse Wärmemenge an die umgebende Luft abgeben. Die Kühlelemente können in dielektrisch vorteilhafter Weise mit einem wärmeleitenden und elektrisch isolierenden Überzug versehen sein, insbesondere einem Metallnitrid oder -oxid, wie typischerweise Bor- oder Aluminiumnitrid oder Aluminiumoxid.

Bei Ausfall der Gebläse resp. der Axialströmung H reicht es für einen längeren Notbetrieb im allgemeinen aus, wenn die Wärmeübergangsflächen der angeströmten Kühlelemente 41 und der Massendurchsatz der Vertikalströmung V so bemessen sind, dass die Vertikalströmung V mindestens ein Drittel, vorzugsweise mindestens die Hälfte der Kühlleistung der Axialströmung H erreicht.

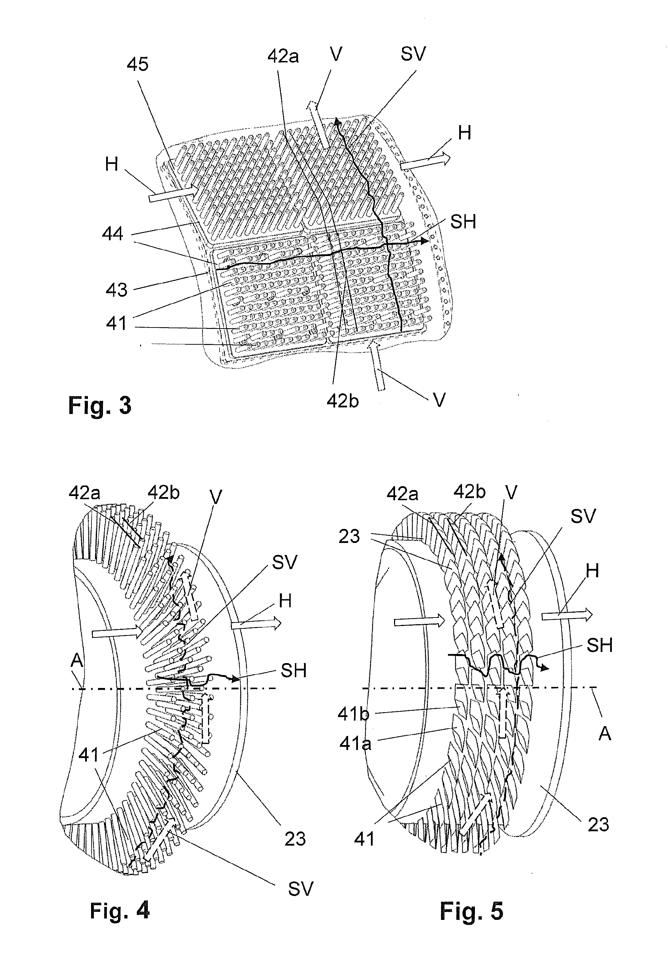

Eine solche Kühlleistung der Vertikalströmung V kann bei Ausfall der Axialströmung H resp. bei nur noch geringer Axialströmung H in vorteilhafter Weise mit stiftförmig ausgebildeten Kühlelementen 41 erzielt werden. Bei der aus Fig.3 ersichtlichen achsparallelen Anordnung der als Kühlelemente wirkenden Stifte sind die Strömungskanäle SV gut ausgebildet und können einen für eine gute Kühlleistung ausreichend grossen, vorwiegend durch natürliche Konvektion hervorgerufenen Massenstrom führen. Infolge der zuvor beschriebenen Bemessung und Ausbildung der Kühlelemente 41 und des geeignet bemessenen Abstands benachbarter Kühlringe 42a, 42b kann so eine durch natürliche Konvektion angeregte Vertikalströmung eine ausreichend Kühlwirkung bewirken.

Ist der Abstand benachbarter, d.h. in Umfangsrichtung des Hochstromleiters aufeinanderfolgender, Kühlelemente 41 in den Kühlringen 42a und 42b kleiner als der axiale Abstand dieser beiden Kühlringe, so kann bei einer für eine optimale Kühlleistung der Vertikalströmung geeigneten Wahl des axialen Abstands von typischerweise 10 bis 15 mm der Abstand im Umfangsrichtung kleiner als der axiale Abstand bemessen werden und beispielsweise 7 oder 8 Millimeter betragen. Die Strömungskanäle SH weisen dann zwar einen grösseren Strömungswiderstand als die Strömungskanäle SV auf, durch die Wirkung der Gebläse kann jedoch die Kühlleistung der Axialströmung H in einfacher Weise grösser oder gleich der Kühlleistung der Vertikalströmung V eingestellt werden.

Aus Fig.3 ist auch ersichtlich, dass jeder der beiden Kränze 40a, 40b mindestens zwei in Umfangsrichtung aufeinanderfolgende Segmente 44 aufweist. Ersichtlich enthält jedes dieser Segmente einen Teil der als Stift ausgeführten Kühlelemente 41. Die Segmente sind mit Hilfe von nicht dargestellten Befestigungsmitteln, wie typischerweise Schraub- oder Nietbolzen, am Abschnitt 23 des Stromleiters 20 fixiert. Ein solchermassen ausgebildeter Kranz kann bei der Fertigung der Generatorableitung in einfacher Weise hergestellt und am Hochstromleiter 20 befestigt werden. Die Segmente 44 können durch Warmverformen oder durch Giessen des die Stromwärme gut leitendem Materials gefertigt werden. Ersichtlich weist das Segment 44 einen als Platte ausgebildeten Montagekörper 45 auf, auf dessen oberer Seite die als Stifte ausgebildeten Kühlelemente 41 fussen und dessen untere Seite in wärmeleitender Weise am Abschnitt 23 des Hochstromleiters 20 angebracht sind. Bei dieser Ausführungsform fussen die als Stift ausgeführten Kühlelemente 41 senkrecht auf einer eben ausgeführten Aussenfläche des Montagekörpers 45. Sie sind daher weitgehend parallel zueinander ausgerichtet und verlaufen daher nicht alle streng in radialer Richtung. Da der Montagekörper 45 jedoch tangential am Kreis 43 geführt ist und sich über seine Länge in tangentialer Richtung eng an den Kreis 43 anschmiegt, beträgt die Abweichung von der radialen Richtung nur wenige, typischerweise bis zu 5, Winkelgrad. Diese Abweichung ist so gering, dass die Wirkung dieser von der radialen Richtung abweichenden Kühlelemente und die Wirkung streng radial ausgerichteter Kühlelemente sich hinsichtlich der Bildung der Strömungskanäle SH und SV nur unwesentlich unterscheiden.

In den Figuren 4 und 5 sind zwei Ausführungsformen der Hochstromanordnung nach der Erfindung dargestellt, bei denen die Kühlelemente 41 zweier in axialer Richtung aufeinanderfolgender Kühlringe 42a und 42b nicht achsparallel, sondern in Umfangsrichtung gegeneinander versetzt angeordnet sind. Bei dieser Anordnung der Kühlelemente 41 kann der Strömungswiderstand der Strömungskanäle SH durch geeignetes Versetzen der Kühlelemente 41 der beiden Kühlringe 42a resp. 42b gegeneinander in Umfangsrichtung zum Strömungswiderstand des Strömungswegs SV so bestimmt werden, dass der Massenstrom in den Strömungskanälen SH bei eingeschalten Gebläsen den Massenstrom in den Strömungskanälen SV bei ausgefallenen Gebläsen lediglich um einen für einen Notbetrieb noch ausreichenden Faktor von typischerweise 1,5 bis 2 übertrifft.

Wie bei der Ausführungsform gemäss Fig.4 dargestellt sind die Kühlelemente 41 jeweils als Stift ausgeführt, können aber auch - wie aus Fig.5 ersichtlich ist - jeweils flächenförmig ausgebildet sein. Die Kühlelemente 41 sind dann mit einer flächig ausgebildeten Seite der Axialströmung H ausgesetzt und zeichnen sich wegen ihrer flächigen Form und wegen ihrer geeigneten Anordnung durch eine gute Kühlleistung auch beim Ausfall der Gebläse aus. Diese der Axialströmung H ausgesetzte Seite der Kühlelemente weist zwei Anströmflächen 41 a und 41 b auf, von denen die eine, nämlich 41 a, senkrecht zur Axialströmung und die andere, nämlich 41 b, gegenüber der Axialströmung resp. der Achse A um einen Winkel von höchstens 45° geneigt ist. Alternativ kann nur eine der beiden Anströmflächen 41 a oder 41 b vorgesehen sein.

In Abänderung der Ausführungsform gemäss Fig.5 können die flächig ausgebildeten Kühlelemente 41 - entsprechend der Ausführungsform gemäss den Figuren 1 bis 3 - auch in axialer Richtung fluchten.

Zudem gibt es auch Ausführungsformen, in denen nicht notwendigerweise alle Kühlelemente 41 stift- oder flächenförmig ausgebildet sind. In diesen Ausführungsformen ist lediglich der überwiegende Teil der Kühlelemente stift - oder flächenförmig ausgebildet und weist der verbleibende Teil eine andere Form auf. Beispielsweise enthält dann bei einem überwiegenden Anteil an stiftförmigen Kühlelementen der verbleibende Anteil flächenförmig und/oder andersartig ausgebildete Kühlelemente.

### BEZUGSZEICHENLISTE

- A: Achse
- G: Generatorschalter
- H: axiale Kühlluftströmung, Axialströmung
- V: vertikale Kühlluftströmung, Vertikalströmung
- T: Trennschalter
- SH: axial erstreckte Strömungskanäle
- SV: im Umfangsrichtung verlaufende, vertikal von unten nach oben erstreckte Strömungskanäle
- 10: Kapselung
- 11, 12: Mantelrohre
- 13: Gehäuse
- 14: parallel zur Achse A erstreckte Wände des Gehäuses
- 14a: Dach des Gehäuses 13
- 14b: Boden des Gehäuses 13
- 15: Querwände
- 16: Innenraum
- 20: Hochstromleiter
- 21, 22, 23, 24, 25: Abschnitte des Hochstromleiters 20
- 22a: Löschkammerisolator
- 30: Kühlvorrichtung
- 31, 32, 33: Kühler
- 40a, 40b: Kühlkränze
- 41: Kühlelemente
- 41 a, 41 b: Anströmflächen
- 42a, 42b: Kühlringe
- 43: Kreise
- 44: Segmente
- 45: Montagekörper

## Patentansprüche

1. Hochstromanordnung mit einem längs einer Achse (A) erstreckten, vorwiegend horizontal ausgerichteten und mit Hochspannungspotential belastbaren, axialsymmetrischen Hochstromleiter (20), einer den Hochstromleiter (20) umfassenden, mit Erdpotential verbindbaren Kapselung (10), einem von Hochstromleiter und Kapselung radial begrenzten Innenraum (16), in dem bei Betrieb der Hochstromanordnung eine in axialer Richtung verlaufende, Kühlluft enthaltenden Axialströmung (H) führbar ist, und mit mindestens einem am Hochstromleiter (20) in thermisch leitender Weise angeordneten, in den Innenraum (16) ragenden Kühler (31, 32, 33), **dadurch gekennzeichnet, dass** der mindestens eine Kühler mindestens einen um die Achse geführten Kranz (40a, 40b) von vorwiegend radial ausgerichteten Kühlelementen (41) aufweist, und dass die Kühlelemente (41) vorwiegend axial geführte erste Strömungskanäle (SH) bilden sowie zweite Strömungskanäle (SV), die entlang dem Umfang des Hochstromleiters (20) geführt sind und bei Ausfall der Axialströmung (H) der Führung einer entlang dem Umfang des Hochstromleiters (20) ausgerichteten, von unten nach oben verlaufenden Vertikalströmung (V) dienen.

2. Hochstromanordnung nach Anspruch 1, **dadurch gekennzeichnet, dass** der Kranz mindestens zwei in axialer Richtung mit Abstand voneinander gehaltene Kühlringe (42a, 42b) enthält, in denen jeweils eine von zwei Gruppen der Kühlelemente (41) angeordnet sind, und dass die Kühlelemente jeder der beiden Gruppen mit Abstand voneinander in Umfangsrichtung der Kühlringe angeordnet sind.

3. Hochstromanordnung nach Anspruch 2, **dadurch gekennzeichnet, dass** die Kühlelemente (41) eines ersten (42a) und des zweiten (42b) der mindestens zwei Kühlringe achsparallel angeordnet sind.

4. Hochstromanordnung nach Anspruch 2, **dadurch gekennzeichnet, dass** die Kühlelemente (41) eines ersten (42a) und des zweiten (42b) der mindestens zwei Kühlringe in Umfangsrichtung jedes Ringes gegeneinander versetzt angeordnet sind.

5. Hochstromanordnung nach einem der Ansprüche 1 bis 4, **dadurch gekennzeichnet, dass** zumindest der überwiegende Teil der Kühlelemente (41) stiftförmig ausgebildet.

6. Hochstromanordnung nach einem der Ansprüche 1 bis 4, **dadurch gekennzeichnet, dass** zumindest der überwiegende Teil der Kühlelemente (41) flächenförmig ausgebildet ist und mindestens eine von zwei Anströmflächen (41 a, 41 b) für die Axialströmung (H) aufweist, von denen eine erste (41 a) vorwiegend senkrecht zur Achse (A) und die zweite (41 b) gegenüber der Achse geneigt ausgerichtet ist.

7. Hochstromanordnung nach einem der Ansprüche 1 bis 6, **dadurch gekennzeichnet, dass** der mindestens eine Kranz (40a, 40b) mindestens zwei in Umfangsrichtung des Kranzes aufeinanderfolgende Segmente (44) aufweist, von denen mindestens eines einen Teil der Kühlelemente (41) enthält.

8. Hochstromanordnung nach Anspruch 7, **dadurch gekennzeichnet, dass** das mindestens eine Segment (44) einen wärmeleitend auf dem Hochstromleiter (20) fixierten Montagekörper (45) aufweist.

9. Hochstromanordnung nach Anspruch 8, **dadurch gekennzeichnet, dass** der Montagekörper als Platte ausgebildet ist.
